Europäisches Patentamt

European Patent Office

Office européen des brevets

(19)

(11) Publication number: **0 065 029**
**B1**

(12) # EUROPEAN PATENT SPECIFICATION

(45) Date of publication of patent specification: **12.03.86**

(21) Application number: **81103903.1**

(22) Date of filing: **20.05.81**

(51) Int. Cl.⁴: **B 07 C 5/36**, B 23 Q 7/12,
B 65 G 47/10

(54) **Method of and apparatus for classifying steel products.**

(43) Date of publication of application:
**24.11.82 Bulletin 82/47**

(45) Publication of the grant of the patent:
**12.03.86 Bulletin 86/11**

(84) Designated Contracting States:
**DE FR GB SE**

(56) References cited:
**DE-A-2 502 316**
**DE-A-2 520 163**
**US-A-2 863 574**
**US-A-3 923 157**

(73) Proprietor: **Nippon Steel Corporation**
**6-3 Ohte-machi 2-chome Chiyoda-ku**
**Tokyo 100 (JP)**

(72) Inventor: **Inazaki, Koji**
**189-1, Chiribettcho-3-chome**
**Muroran-shi (JP)**
Inventor: **Ueda, Takayuki**
**No. 303 Fuchu-apartment**
**9027-1, Fuchu-shi Tokyo (JP)**
Inventor: **Oka, Toshihiro**
**24-12, Wanishicho-1-chome**
**Muroran-shi (JP)**
Inventor: **Kawai, Rippo**
**33-5, Wanishicho-1-chome**
**Muroran-shi (JP)**

(74) Representative: **Heunemann, Dieter Dr.**
**VOSSIUS VOSSIUS TAUCHNER HEUNEMANN**
**RAUH P.O. Box 86 07 67 Siebertstrasse 4**
**D-8000 Munich 86 (DE)**

Courier Press, Leamington Spa, England.

## Description

### Background of the invention

Steel products such as bars, rods, shapes and tubes of steel after having been formed by hot rolling are sorted according to an ordered length, size, specification, standards, presence of flaw, defects and other surface conditions and are bundled into a predetermined number of units and a predetermined shape before shipping.

The present invention relates to a method of and an apparatus for sorting steel products, thereby making it possible to sort these steel products flowing along a sorting line, efficiently and correctly with quite a simple equipment.

Current, users and customers tend to order products of different lengths varying in the order of hundreds of millimeters to that the number of kinds of products is increasing. For achieving a higher yield rate, therefore, it is desired to increase the number of the sorting beds. However, as will be explained later in more detail with reference to the drawings, the conventional sorting method requires a drastic increase of the installation cost, as well as lowered rate of operation of each sorting bed, when the number of sorting beds is increased. The increased number of sorting beds also necessitates greater mill floor space and additional conditions of operation, and makes unmanned operation difficult. Furthermore, since the steel products are conveyed a long distance in groups, various troubles are liable to occur such as misalignment of the ends of products, overlapping and so forth, resulting in a lowered treating efficiency.

US—A—2 863 574 discloses a mail separator in which a letter to be sorted falls from a supply source into a movable shuttle and from the shuttle to one of the compartments of a receptacle. The shuttle moves relative to the stationary compartments. When all the compartments are filled, the letters of a certain destination are discharged at the same time to a conveyer, followed by the letter of another destination. With this arrangement, several vacant compartments are needed for delivery of letters therein, and the vertical arrangement of the separator raises the costs and is not suitable for sorting steel products.

### Summary of the invention

Accordingly, an object of the present invention is to obviate the above described problems of the prior art and to provide an improved sorting method and apparatus which are capable of classifying and sorting steel products of a plurality of classes with a high rate of operation and with low installation costs.

The invention is characterised by the features of the claims.

The invention and the preferred embodiments are explained in detail below with reference to the accompanying drawings.

### Brief description of the drawings

Fig. 1 is a plan view of a conventional system for sorting steel products;

Figs. 2a to 2f are plan views illustrating the sequence of the sorting method in accordance with the invention;

Fig. 3 is a plan view of the whole part of a sorting apparatus in accordance with an embodiment of the invention;

Fig. 4 is a sectional view taken along the line A—A of Fig. 3;

Fig. 5 is a sectional view taken along the line B—B of Fig. 3;

Fig. 6 is an illustration of a control signal; and

Fig. 7 illustrates a logic set in a computer.

### Description of the preferred embodiments

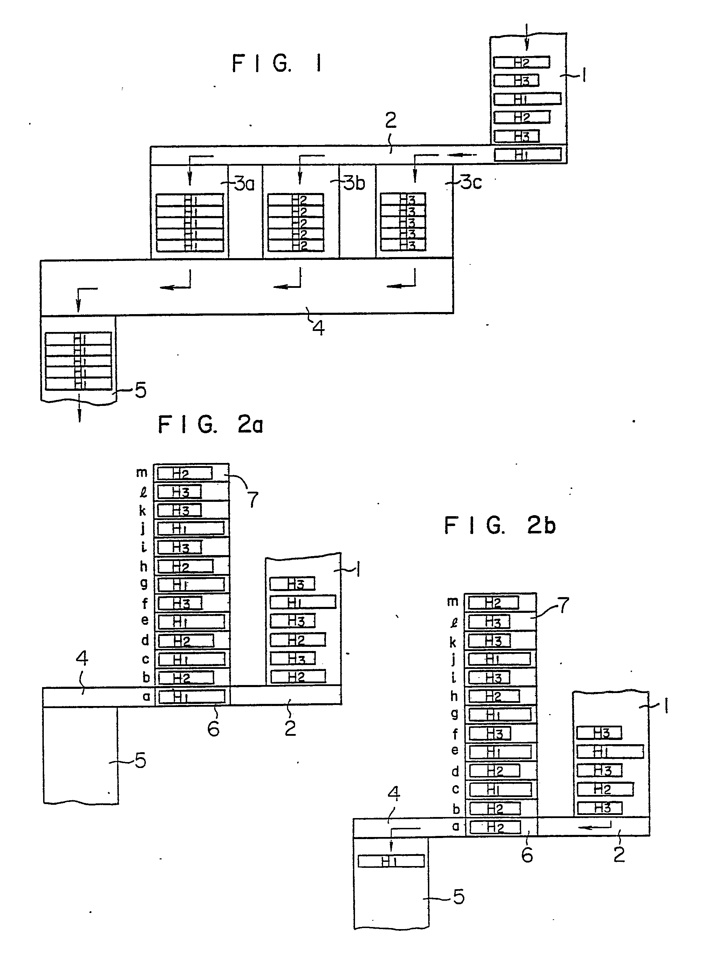

Before giving a detailed description of the preferred embodiments, the conventional sorting system is explained with specific reference to Fig. 1, so that the drawbacks of the prior art and hence the advantages of the invention over the prior art may be better understood.

A typical conventional sorting apparatus according to Fig. 1 has a plurality of sorting beds 3a, 3b, 3c each of which having a traversing mechanism such as a chain transfer means. Usually, 3 to 5 sorting beds are used.

The steel products $H_1$, $H_2$ and $H_3$ which have been cut into various ordered lengths are delivered to an inspection bed 1 where the size and shape are inspected. Thereafter, the products $H_1$, $H_2$ and $H_3$ are taken into respective sorting beds 3a, 3b, 3c according to the ordered lengths by means of the inlet table. These steel products are made to stay on these sorting beds and dispatched in bundling units each including, for example, 5 product lengths by a delivery table 4 having a width greater than the inlet table 2, to a bundling bed 5 where the products are bundled.

As mentioned before, the users and customers currently tend to order products of different lengths varying in the order of hundreds of millimeters so that the number of classes per length of the product is increasing. For achieving a higher yield rate, therefore, it is required to increase the number of the sorting beds. However, the conventional sorting method requires a drastic increase of the installation cost, and disadvantageously reduces the rate of operation of each sorting bed, when the number of the sorting beds is increased.

The increased number of sorting beds also necessitates greater mill floor space and additional conditions of operation, and makes unmanned operation difficult. Furthermore, since the steel products are conveyed a long distance in units each containing several products, various troubles occur such as misalignment of the ends of products, overlapping and so forth, resulting in lower operational efficiency.

These problems are overcome by the sorting method and apparatus of the invention, as will be understood from the following description of the embodiments of the present invention.

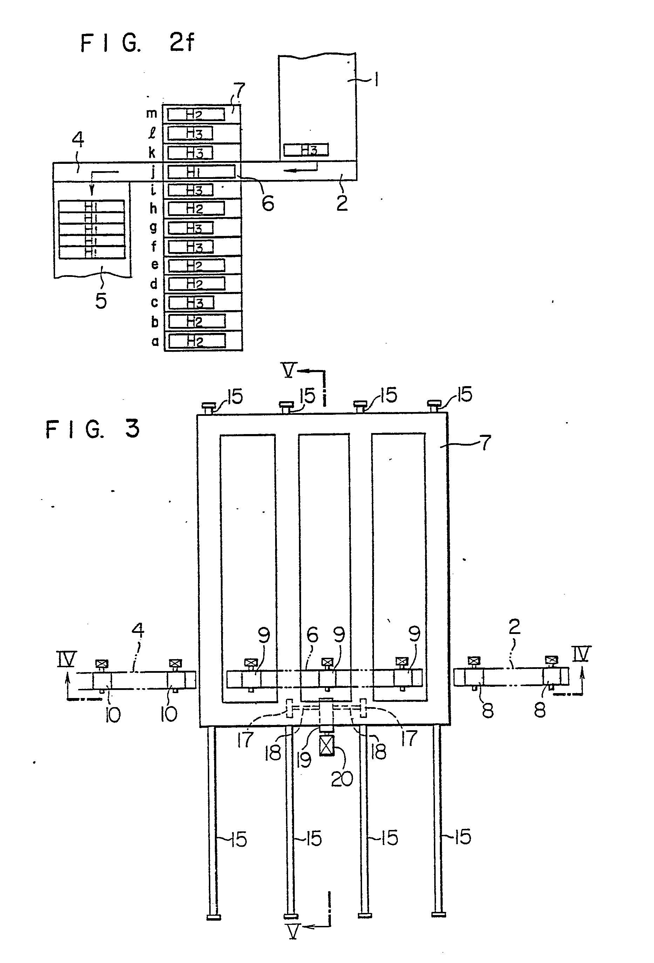

As shown in Figs. 2a to 2f and 3, steel products of various lengths are introduced into the sorting system through inlet table 2. These steel products are temporarily held for accumulation on a sorting apparatus which consists of a vertically movable sorting roller table 6 and a sorting truck 7 having various compartments and variable mounting positions relative to the inlet table. A steel product of a predetermined length is selected out of the steel products staying on the sorting truck and is delivered to an outlet table 4. This operation is repeated to sort the steel products into classes according to the size, specifications or standards, presence of surface defects such as flaws and so forth.

Briefly, the sorting system of the invention for carrying out the above-described method includes the inlet table 2, outlet table 4 and a sorting apparatus disposed between these tables. The sorting apparatus has a vertically movable sorting roller table 6 and a sorting truck 7 which is movable at a right angle to the direction of movement of the steel products and disposed in a side-by-side relation to the sorting roller table 6.

Preferred embodiments of the method and apparatus of the invention will be described in more detail hereinunder with specific reference to Figs. 3, 4 and 5.

As shown in Fig. 3, rollers 8 are the rollers of the roller table 2, while the rollers 10 are the rollers of the roller table 4, disposed in the vicinity of the sorting truck 7.

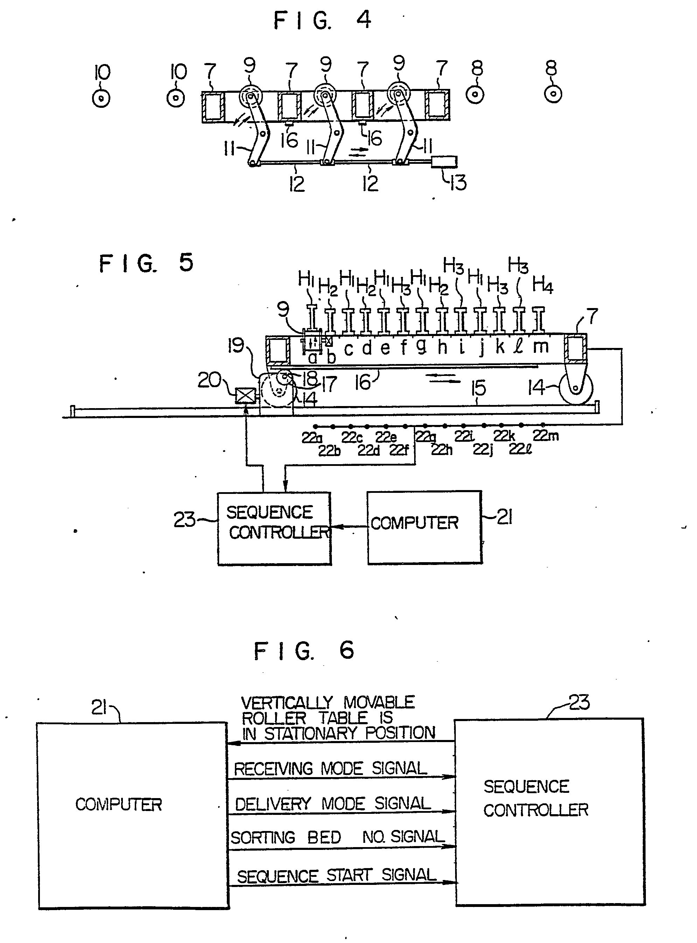

As will be seen from Fig. 4, the roller table 6 has flanged rollers 9 of a width somewhat larger than the width of the steel products, a link mechanism 11, rod 12, and a cylinder 13. The arrangement is such that the rollers are moved up and down as the cylinder 13 is actuated, in order to avoid interference with the steel products on the sorting truck 7. The rollers 9 are lowered when the sorting truck 7 is traversed. The rollers 9 can take the highest level flush with the rollers 8 and 10, and the lowest level somewhat lower than the upper surface of the sorting truck 7.

As will be understood from Fig. 5, the sorting truck 7 is provided with several idle wheels 14. The upper surface of the sorting truck 7 is positioned substantially at the mid height between the highest and lowest positions of the rollers 9. The driving system for the sorting truck 7 includes a rack 16, pinion 17, pinion shaft 18, reducer 19 and a driving motor 20. The sorting truck 7 is moved on the rail 15 through the wheels 14 as the motor 20 is energized.

The sorting truck 7 is provided with a plurality of limit switches 22a, 22b, 22c . . . 22m. The number of the limit switches corresponds to the maximum number of steel products which can be simultaneously placed on the sorting truck 7. The movement of the sorting truck 7 is controlled by a controller 21 in accordance with the truck position information and tracking information 23 which are derived from the input signal of the limit switches. The limit switches may be mounted on the rail, instead of being mounted on the truck 7.

Hereinafter, a preferred embodiment of the sorting method of the invention will be explained in detail.

Figs. 2a to 2f are partial plan views of a rolled product arranging line, for explaining the sorting method of the invention.

For the better understanding, the method of sorting the steel products according to their length is explained hereinafter. The method of the present invention can, however, also be used for sorting products according to other factors such as size, or specification standards, surface defects, such as flaws and so forth.

The steel products of various ordered lengths conveyed in a random manner are at first delivered to an inspection bed 1 for inspecting the size, shape and so forth, and are transferred through an inlet table 2 and vertically movable roller table 6 into a sorting truck 7 so as to be temporarily accumulated in the latter.

After a predetermined number of steel products is placed or stored on the truck 7, the steel products of the same length are transported as a unit to a bundling bed 5 where the products are stacked in a predetermined bundling form and then bundled. Fig. 2a shows the state in which the sorting truck 7 is filled with the steel products up to its full capacity, by the combined operation of the inlet table 2 and vertically movable roller table 6, and the traversing of the sorting truck 7.

More specifically, at a position (a) on the sorting truck 7, a steel product $H_1$ is placed. Similarly, steel products $H_2$, $H_1$ . . . $H_3$ and $H_2$ are placed at the positions (b) to (m), respectively, on the truck 7. Meanwhile, the inspection bed 1 has successive products of various lengths.

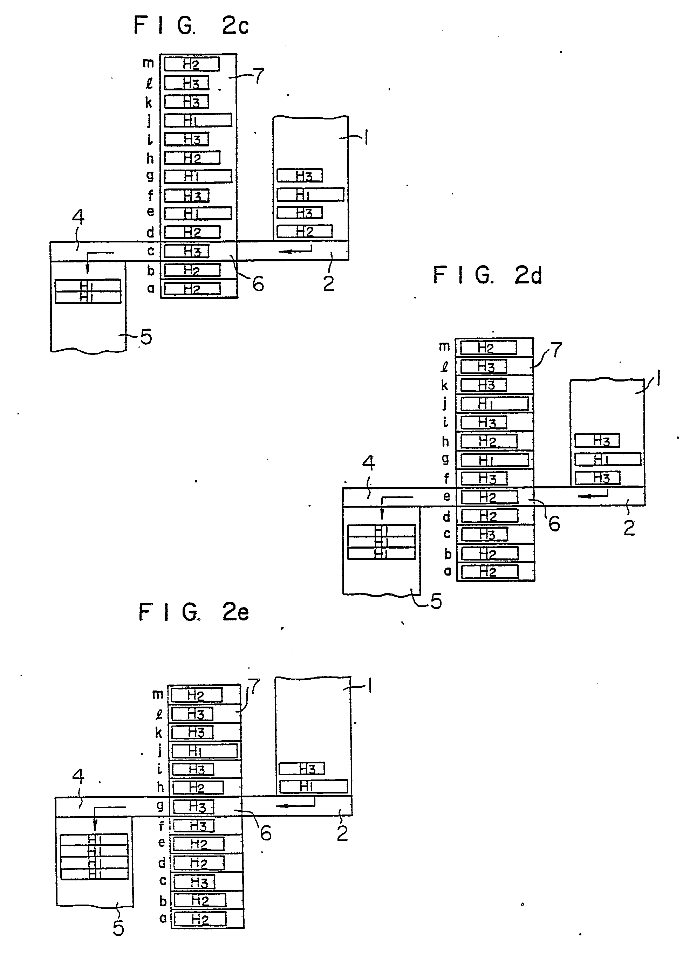

As shown in Fig. 2b, five steel products of a length $H_1$ for just making one bundle have been placed on the sorting truck 7. Therefore, the steel products $H_1$ at position (a) is transferred to the bundling bed 5 through the sorting table 6 and the outlet table 4, in order to form the bundle of the steel products $H_1$. Meanwhile, the next steel product, which is the product $H_2$, is fed to the vacant position, position (a) of the sorting truck 7 through the inlet table 2 and sorting table 6. The second one of the steel product $H_1$ is at the position (c). Therefore, as shown in Fig. 2(c), the sorting truck 7 traverses downwardly to the position where the position (c) on the truck 7 coincides with the sorting roller table 6, as shown in the drawing, and the second one of the steel products $H_1$ is delivered to the bundling bed 5 through the sorting roller table 6 and the outlet table 4. Simultaneously, the next steel product, which in this case is the product $H_3$, is fed to the new vacant space, i.e. to the position (c) on the sorting truck 7, through the inlet table 2 and the sorting roller table 6.

In the state shown in Fig. 2d, the sorting truck 7 has traversed to the position where the position (e) coincides with the sorting table 6, and the third one of the steel product $H_1$ has been forwarded to the bundling bed 5, while the new vacant space, i.e. the position (e) has been filled with the next steel product which is in this case the product H₃.

Similarly, in the state shown in Fig. 2e, the steel product H₁ has been forwarded from the position (g) on the sorting truck 7, and this position is newly loaded with the next product which in this case is the product H₃.

Finally, as shown in Fig. 2f, the sorting truck 7 traverses to the position where the position (j) coincides with the sorting truck 7 to discharge the final one of the steel products H₁ to the bundling bed 5 while taking the next steel product H₁ to the position (j).

It will be seen that, at this time, five steel products H₁ are stored on the bundling bed 5. Thus, the sorting apparatus is ready for making one bundle of the steel products H₁.

In the state shown in Fig. 2f, five pieces of steel products H₂ and five pieces of steel products H₃ are already prepared on the sorting truck 7. Therefore, the sorting truck 7 is traversed successively to the positions (m), (h), (e), (d), (b), (c), (f), (g), (i) and (k) into alignment with the sorting table 6 to successively receive, sort and bundle the steel products H₂ and H₃.

Thus, it is possible in this manner to sort and bundle the steel products of various ordered lengths delivered in a random manner, into several groups each consisting of the same ordered length.

Hereinafter it will be explained by means of an example how the sorting operation is controlled in the sorting system of the invention.

In this example, a computer is used as a supervisory control means which determines the timing of the receipt of the product from the sorting table and the delivery of the steel product to the sorting table, the position to which the sorting truck is to be moved and so forth. Also, a sequence controller is used as controlling means which controls the actual operation of the mechanical equipments in accordance with the signals derived from the computer.

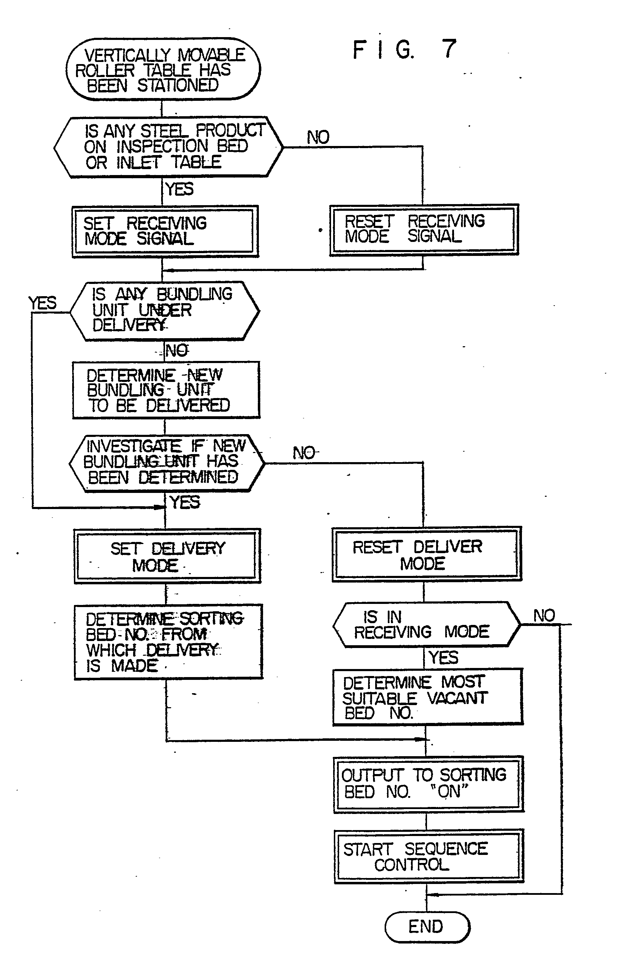

Fig. 6 illustrates the control signals which are exchanged between the computer 21 and the sequence controller 23, while Fig. 7 shows the logic set up in the computer 21.

In this example, one cyclic sequence of operation includes the successive steps of lowering the vertically movable roller table 6 from the stationary position, moving the sorting truck 7 to a predetermined position, lifting the vertically movable roller table 6, discharging and feeding the steel products, and stationing the roller table 6 at the raised position.

To this end, as will be seen from Fig. 6, the computer 21 starts the program upon receipt of a signal indicating that the roller table 6 has been stationed. This signal is given by the sequence controller 23. A receiving mode signal sent by the computer 21 to the sequence controller 23 is the signal for setting the receipt of the next steel product by the sorting truck 7, while the delivery mode signal is the signal for setting the delivery of the steel products from the sorting truck 7.

When any steel product is to be delivered from the truck 7, the sorting bed No. signal, i.e. a signal indicating the position on the truck 7, is given simultaneously with the delivery mode signal. A sequence start signal for starting the automatic operation of the sequence controller 23 is given after the delivery of all setting signals.

An actual example of control will be explained hereinunder with reference to Fig. 7 showing the logic set up in the computer 21.

As stated before, the computer 21 is started by the sequence controller 23 when the vertically movable sorting table 6 has been stationed after the completion of the preceding cycle of sequential operation. The computer 21 is making a tracking, i.e. the memorization of information of steel products on all lines, and stores the kinds and locations of all steel products. In accordance with the tracking information, the computer first of all checks whether any steel product is on the inspection bed 1 of the inlet table 2. If rolling is stopped or if the supply of the material is suspended for a long time, no steel product is placed on the inspection bed 1 nor on the inlet table 2. In such a case, the receiving mode signal is reset, in order to advance the sequence without waiting for the steel product. If there is any steel product on the inspection bed 1 or the inlet table 2, the receiving mode signal is set to make the sorting truck 7 receive the oncoming steel product in the next cycle of sequential operation. If the oncoming steel·product has not yet arrived at the inlet table 2, it will take some time for the sorting truck 7 to receive the steel product. However, if the time difference is sufficiently short, the receipt and delivery of the successive steel products should preferably occur concurrently, in order to save time.

On the basis of the tracking information in the sorting truck 7, it is then checked whether any bundle unit is underway. If there is any, the delivery mode is set to determine the position of the sorting truck 7 for the delivery of the next one of the steel products of the bundle unit underway, and the signal representative of the thus determined position of the sorting truck 7 is sent to the sequence controller 23. If there is no bundling unit under delivery, the computer determines the new bundle unit to be delivered. In the event that the new bundle unit to be delivered is determined, the mounting positions of the steel products of the thus determined bundle unit on the sorting trucks, as well as the mounting position on the truck coinciding with the vertically movable roller table 6, are investigated using the tracking information. With this knowledge the computer determines the order or sequence of the traversing of the sorting truck 7 so as to minimize the distance which the truck 7 traverses for delivering all steel products of the bundle unit. After determination of this order, the delivery mode signal and the sorting bed No. signal are issued for the first one of the steel products of this bundle unit as stated before.

Conversely, if the computer finds that the new bundle unit is not yet completed, the delivery mode is reset. In this case, if the receiving mode has already been reset, no actual operation is made. However, if the receiving mode only is set, the computer determines such a vacant sorting bed No., i.e. the mounting position, so as to minimize the distance of the traverse movement of the sorting truck 7, and issues a signal indicating this bed No. or mounting position.

Thus, in the cases where either the receiving or the delivery is made, the sequence start signal is issued finally.

On the other hand, the sequence controller 23 starts the automatic sequential operation in accordance with the sequence start signal from the computer 21. At first, the sequence controller 23 brings the designated sorting bed No., i.e. the mounting position, into alignment with the vertically movable roller table 6. If the actual position of the sorting truck coincides with the intended position, the process directly proceeds to the next step of the sequence. However, if the actual position does not coincide with the intended one, the sorting truck 7 is moved to the intended position after the vertically movable roller table 6 is lowered. The sequence controller starts the movement of the sorting truck 7 either to the left or right depending on the actual position of the sorting truck 7 and its intended one. The operation is stopped when a signal is received from the limit switch corresponding to the intended position. The roller table 6 is then lifted upwardly.

The next step of the sequential operation is receipt and delivery of the steel products. With the rollers of the vertically movable roller table 6 being rotated, the rollers of the inlet table 2 are driven if the receiving mode signal is being received. Also, if the delivery mode signal is being received simultaneously, the rollers of the outlet roller table 4 are driven concurrently. The rollers of the vertically movable table 6 are stopped, if no receiving mode signal is given when the delivery of the steel product is finished. However, if the receiving mode signal is received, these rollers are stopped when the receipt of the steel product from the inlet table is finished. One cycle of the sequential operation is thus finished, when the vertically movable roller table 6 stops to operate. The sequence controller then sends the signal representative of the stopping of the roller table 6 to the computer 21, for the input of the setting signals of the next cycle of sequence operation. This sequential operation is repeated cyclically to complete the sorting of the steel products automatically.

Although in Fig. 5, H-shaped steels are handled in the described embodiment, the invention is applicable to all kinds of shaped steel products of other cross-sectional shapes, such as rods, bars and so forth, requiring sorting.

It is also to be noted that, while the described embodiment classifies the steel products into 3 classes each having 5 pieces of products using the sorting truck which can hold 13 product pieces at a time, the maximum number of pieces of steel products which can be placed on the sorting truck may be varied suitably in accordance with the number of pieces of steel products included in a unit and the number of classes, i.e. the number of ordered lengths.

More specifically, the maximum number N of the pieces which can be placed on the sorting truck can be expressed as a function of the number B of pieces included in a unit and the number P of the classes.

$$N=(B-1) P+1 \qquad (1)$$

For instance, for sorting the steel products into 6 classes each including 5 pieces of products, the maximum number of pieces held is calculated as follows:

$$(5-1) \times 6+1=25$$

Similarly, for sorting the steel products into 8 classes each including 5 pieces of products, the maximum number of pieces held is calculated as follows:

$$(5-1) \times 8+1=33$$

If it is assumed that steel products are bundled into 8 classes each having 5 product pieces by means of the sorting apparatus which can hold the maximum number of 25 pieces, sorting failures or fractioning of the bundles will occur with certain frequency. In such a case a smaller or odd bundle unit of 3 product pieces may be made in order to accommodate the fraction. A simulation was made for 1000 pieces of steel products. The rate of the smaller or odd bundling units was as low as 0.9% based on the number of product pieces. Therefore, if it is assumed that the odd number bundling is allowed up to the rate of 0.9%, the sorting into 8 classes, each having 5 pieces, can be done according to the invention by means of only one sorting truck holding the maximum number of 25 pieces, whereas the prior art requires 8 sorting beds or floors each of which can carry 5 pieces at a time.

Although in the described embodiment, the sorting apparatus includes a vertically movable roller table 6 and a sorting truck 7, the apparatus can also be so arranged that the sorting truck 7 moves up and down while the table 6 is kept stationary. It is also possible to use a reversible chain conveyor in place of the sorting truck 7.

As has been described, according to the invention it is possible to sort the steel products into a greater number of classes, using a compact and simple equipment. In consequence it is possible to remarkably improve the yield rate. In addition, since the transfer of the products is made piece by piece, the undesirable overlapping or stacking of the products, as well as misalignment of the ends of the products, is completely eliminated to ensure safe and efficent sorting thus contributing to the development of the field of industry concerned.

## Claims

1. Method of sorting steel products of various classes being delivered by an inlet table (2) in a random manner with respect to the classes into desired classes, said method being characterized by the steps of

a) making said steel products coming from said inlet table (2), by means of a sorting table (6) being aligned with said inlet table (2) and with an outlet table (4) located at the downstream side of said sorting table (6), stay temporarily on a sorting truck (7), the sorting truck (7) being movable so as to shift the position where said steel products are mounted thereon with respect to said sorting table (6),

b) selecting any desired one out of said steel products staying on said sorting truck (7),

c) moving said sorting truck (7) to transfer the selected steel product to said sorting table (6),

d) transferring the selected steel product to said outlet table (4) while taking, by means of said sorting table (6), a subsequent steel product from said inlet table (2) onto said sorting truck (7), and

e) repeating the above-mentioned steps.

2. Apparatus for sorting steel products of various classes being delivered in a random manner with respect to the classes into desired classes, comprising an inspection bed (1), an inlet table (2), and an outlet table (4) characterized by

a) sorting truck (7) for a plurality of steel products being movable in a horizontal direction normal to the direction of movement of said steel products on said inlet table (2) and said outlet table (4), and

b) a vertically movable sorting table (6) being alignable with said inlet table (2) and said outlet table (4).

## Patentansprüche

1. Verfahren zum Sortieren von Strahlerzeugnissen verschiedener Klassen, die von einem Einlaßtisch (2) in bezüglich der Klassen zufälliger Weise zugeführt werden, in gewünschte Klassen, gekennzeichnet durch die folgenden Verfahrensschritte:

a) vorübergehendes Ablegen der vom Einlaßtisch (2) kommenden Stahlerzeugnisse auf einem Sortierwagen (7) mittels eines Sortiertisches (6), der mit dem Einlaßtisch (2) und mit einem in Transportrichtung nach dem Sortiertisch (6) angeordneten Auslaßtisch (4) ausgerichtet ist, wobei der Sortierwagen (7) derart beweglich ist, daß die Position, an der die Stahlerzeugnisse auf dem Sortierwagen (7) aufliegen, bezüglich des Sortiertisches (6) verschiebbar ist,

b) Auswählen eines gewünschten Stahlerzeugnisses aus den auf dem Sortierwagen (7) liegenden Stahlerzeugnissen,

c) Bewegen des Sortierwagens (7) zum Überführen des gewählten Stahlerzeugnisses zum Sortiertisch (6),

d) Überführen des ausgewählten Stahlerzeugnisses zum Auslaßtisch (4) während ein nachfolgendes Stahlerzeugnis mittels des Sortiertisches (6) vom Einlaßtisch (2) auf den Sortierwagen (7) übernommen wird, und

e) Wiederholen der vorstehenden Verfahrensschritte.

2. Vorrichtung zum Sortieren von Stahlerzeugnissen verschiedener Klassen, die in bezüglich der Klassen zufälliger Weise zugeführt werden, in gewünschte Klassen, mit einem Prübett (1), einem Einlaßtisch (2) und einem Auslaßtisch (4), gekennzeichnet durch

a) einen Sortierwagen (7) für mehrere Stahlerzeugnisse, die auf dem Sortierwagen (7) in einer zur Bewegungsrichtung der Stahlerzeugnisse auf dem Einlaßtisch (2) und dem Auslaßtisch (4) senkrechten und horizontalen Richtung beweglich sind, und

b) einen vertikal beweglichen Sortiertisch (6), der mit dem Einlaßtisch (2) und dem Auslaßtisch (4) ausrichtbar ist.

## Revendications

1. Méthode de tri de produits en acier de différentes classes qui sont délivrés par une table d'entrée (2) d'une manière aléatoire par rapport aux classes en classes voulues, la méthode étant caractérisée en ce qu'elle consiste à:

a) faire rester temporairement sur un chariot de triage (7) les produits en acier provenant de la table d'entrée (2), au moyen d'une table de triage (5) alignée avec la table d'entrée (2) et avec une table de sortie (4) placée en aval de la table de triage (6), le chariot de triage (7) étant mobile pour être déplacé jusqu'à la position où les produits en acier sont montés sur celui-ci par rapport à la table de triage (6),

b) sélectionner un produit voulu parmi les produits en acier restant sur le chariot de triage (7),

c) déplacer le chariot de triage (7) pour transférer le produit en acier sélectionné jusqu'à la table de triage (6),

d) transférer le produit en acier sélectionné jusqu'à la table de sortie (4) tout en prenant, au moyen de la table de triage (6), un produit en acier suivant en provenance de la table d'entrée (2) pour le charger sur le chariot de triage (7), et à

e) répéter les opérations mentionnées ci-dessus.

2. Appareil pour trier des produits en acier de différentes classes qui sont délivrés d'une manière aléatoire par rapport aux classes en classes voulues, comprenant un lit de contrôle (1), une table d'entrée (2), et une table de sortie (4), caractérisé en ce qu'il comprend:

a) un chariot de triage (7) pour un ensemble de produits en acier qui est mobile dans une direction horizontale perpendiculaire à la direction de mouvement des produits en acier sur la table d'entrée (2) et sur la table de sortie (4), et

b) une table de triage (6) mobile verticalement qui peut être alignée avec la table d'entrée (2) et la table de sortie (4).

FIG. 1

FIG. 2a

FIG. 2b

FIG. 2c

FIG. 2d

FIG. 2e

FIG. 2f

7

m | H2
ℓ | H3
k | H3
j | H1
i | H3
h | H2
g | H3
f | H3
e | H2
d | H2
c | H3
b | H2
a | H2

4

1

H3

6

2

5

FIG. 3

15    15    15    15

7

4    9    6    9    9    2

10    10    8    8

17    18    19    20    18    17

15    15    15    15

# F I G. 4

# F I G. 5

# F I G. 6

COMPUTER

21

VERTICALLY MOVABLE
ROLLER TABLE IS
IN STATIONARY POSITION

RECEIVING MODE SIGNAL

DELIVERY MODE SIGNAL

SORTING BED NO. SIGNAL

SEQUENCE START SIGNAL

23

SEQUENCE
CONTROLLER

4

F I G. 7

Flowchart:

VERTICALLY MOVABLE ROLLER TABLE HAS BEEN STATIONED

↓

IS ANY STEEL PRODUCT ON INSPECTION BED OR INLET TABLE — NO → RESET RECEIVING MODE SIGNAL

YES ↓

SET RECEIVING MODE SIGNAL

↓

IS ANY BUNDLING UNIT UNDER DELIVERY — YES

NO ↓

DETERMINE NEW BUNDLING UNIT TO BE DELIVERED

↓

INVESTIGATE IF NEW BUNDLING UNIT HAS BEEN DETERMINED — NO →

YES ↓

SET DELIVERY MODE          RESET DELIVER MODE

↓                          ↓

DETERMINE SORTING BED NO. FROM WHICH DELIVERY IS MADE

IS IN RECEIVING MODE — NO

YES ↓

DETERMINE MOST SUITABLE VACANT BED NO.

↓

OUTPUT TO SORTING BED NO. "ON"

↓

START SEQUENCE CONTROL

↓

END